# EUROPEAN PATENT APPLICATION

(11) **EP 1 415 528 A1**
(43) Date of publication of application: **06.05.2004**
(21) Application number: 03078462.3
(22) Date of filing: 03.11.2003
(51) Int. Cl.: A01D 43/00

(54) **Method for drying cut green crop, and apparatus for thermally treating cut green crop**

(30) Priority: 01.11.2002 NL 1021819
(71) Applicant: Crop Heating B.V., 3703 CM Zeist (NL)
(72) Inventor: van den Broek, Adriaan, 3703 CM Zeist (NL)
(74) Representative: Prins, Adrianus Willem

(57) **Abstract**

A method for drying cut green crop, such as grass, wherein the method comprises at least the following steps:
a) the green crop is taken from a field (F) after cutting and, directly after being taken up from the field, it is subjected to such a thermal treatment that the cell walls in the green crop are broken;
b) the green crop is thrown back on the field (F) directly after the thermal treatment and stays on the field (F) for a drying period; and
c) the green crop is centrally collected after the drying period.

The invention further provides an apparatus for thermally treating cut green crop, wherein the apparatus is provided with conveying means (3, 4) to take the green crop from a field (F), to lead it along a treatment path (T) and to bring it back on the field (F), wherein the apparatus further comprises heat supplying means (7, 9, 11) to supply heat to the treatment path (T).

## Description

The invention relates to a method for drying cut green crop, such as grass.

From practice, a method is known in which, after cutting, the green crop stays on the field for a certain period to dry. After drying, the green crop is taken from the field for further processing and is centrally collected. An advantage of this method is that drying green crop in the open air costs relatively little energy, so that the method is relatively inexpensive.

A disadvantage of the known method is that drying the grass to, for instance, hay on the field costs relatively much time. In addition, the method can onlybe carried out when it does not rain for a relatively long period. Such a rainless period is not always available and, moreover, difficult to predict.

It is an object of the present invention to obviate the disadvantages of the known method.

For this purpose, the method according to the invention is characterized in that the method comprises at least the following steps:
a) the green crop, after cutting, is taken from a field and, directly after being taken from the field, is subjected there to such a thermal treatment that cell walls in the green crop are broken;
b) directly after the thermal treatment, the green crop is thrown on the field and stays on the field for a drying period; and
c) the green crop is centrally collected after this drying period.
   In this manner, the green crop can be dried relatively rapidly and with little energy consumption. As the method is carried out, energy is used for thermally breaking the cell walls in the green crop. In this process, the green crop can already lose some moisture.
   For the natural drying of the green crop as step b) is carried out, only freely available environmental energy is used, which is produced by sun and wind. Surprisingly, it has been found that, especially during the first hours that the crop is on the field during step b), the moisture content of the thermally treated green crop decreases considerably, depending on the weather conditions. This allows the drying period of step b) to be relatively short.
   According to a further elaboration of the invention, the method further comprises the following step:
d) the centrally collected green crop undergoes a central drying step.

This allows the grass, after step c), to be further dried centrally in a relatively rapid and inexpensive manner. Thus, in steps a-c), first, a large amount of moisture is abstracted from the green crop in a relatively short time and in an energy-saving manner, after which the green crop can centrally be brought to a desired final moisture content by wholly or partly abstracting the remaining moisture from the green crop. The amount of this remaining moisture to be abstracted from the crop is relatively small by virtue of method steps a-b), so that the central drying step can also be carried out relatively rapidly and with relatively little energy consumption. It is advantageous when the green crop is dried indirectly in this central drying step. Such a method of indirectly drying green crop is known from practice, see for instance patent EP 0 457 203 which is understood to be incorporated herein by reference. In particular, for the purpose of indirectly drying the green crop, a drying fluid is led via a heat exchanger along combustion gases from a burner to heat this treatment fluid, and the heated drying fluid is supplied to the green crop. After that, the drying fluid can, for instance, be partly directly introduced into the combustion chamber and/or be cleaned by filter means. This allows the central drying step to be carried out relatively cleanly, at least with relatively little dust production.

The following example clarifies the advantages offered by the invention.

### Example

Freshly cut grass was dried using a method according to the invention. Here, cell walls in the grass were broken by bringing the grass, for approximately 30 seconds, under the influence of heated air having a treatment temperature of approximately 300°C. After this treatment, the grass was found to have a moisture content of approximately 80 wt.% (20 wt.% of dry grass). Then, the treated grass was brought back on a field to dry in a natural manner for a drying period of approximately 1 hour. After this period, the grass was found to have a moisture content of only approximately 54 wt.%. As a result of a prolongation of the drying period by 1 hour to a total drying period of 2 hours, the grass was found to have a moisture content of approximately 50 wt.%. After a total drying period of 3 hours, the grass had a moisture content of approximately 47 wt.%. This shows that the thermally treated grass has already lost much moisture after a relatively short natural drying period on the field, so that the grass can then, for instance, be further dried relatively rapidly and inexpensively in an advantageous manner in a step d).

When, directly after the thermal treatment, the grass in this example consists of 800 kg of water and 200 kg of dry grass (which corresponds to a moisture content of 80 wt.%), the grass loses 600 kg of water after the drying period of two hours, so that the grass only contains 200 kg of water (which corresponds to the 50 wt.% moisture content). This shows that, during the drying period, three quarters of the water that the grass contained directly after the thermal treatment have evaporated. Since approximately 3 MJ of energy are needed to evaporate 1 kg of water, by bringing the grass back on the field, an energy saving of approximately 3x600=1800 MJ is obtained during a central drying step d) to be carried out after steps a-c). Thus, by using the method of the invention, in this central drying step, instead of 2400 MJ per 1000 kg of basic product, only 600 MJ per 1000 kg of basic product is used to obtain completely dried grass.

Preferably, the drying period mentioned is such that, after this period, the green crop has a moisture content lower than approximately 70 percent by weight, particularly lower than approximately 60 percent by weight. Because of this, the green crop contains relatively little moisture after the drying period.

After collection, the green crop thus dried in an energy-saving manner undergoes a central final drying in step d). Since the collected green crop contains relatively little moisture, such a final drying likewise requires little energy.

A further advantage of the invention is that the drying of the crop during step b) on the field takes place under the influence of gradual, natural evaporation and not under the influence of forced heating. Because of this, desired feed qualities of the crop, particularly with respect to vitamin contents and nutritional value, hardly, if at all, decrease during the drying period.

The thermal treatment of the green crop is preferably carried out under the influence of a heated treatment fluid, since a fluid can deeply penetrate into an amount of green crop. The treatment fluid can, for instance, have been brought to a treatment temperature in the range of approximately 100-400°C, more particularly in the range of 200-350°C to be able to achieve the breaking of the cell walls. Preferably, the treatment fluid comprises heated water vapor. Water vapor has a relatively large heat capacity, while the coefficient of heat transfer between the wet green crop and the water vapor is relatively large. This allows heated water vapor to relatively rapidly heat up the green crop in order to break the cell walls.

The invention also provides an apparatus for thermally treating cut green crop, the apparatus being provided with conveying means to take the green crop from a field, lead it along a treatment path and bring it back on the field, with the apparatus further comprising heat supplying means to supply heat to the treatment path, the conveying means and heat supplying means being arranged to subject green crop led along the treatment path to such a thermal treatment, that cell walls in the green crop are broken under the influence of this treatment.

Using such an apparatus, green crop can be thermally treated with relatively little energy consumption for the purpose of an energy-saving drying of the green crop.

The apparatus can at least carry out steps a) and b) of the method according to claim 1, so that, by using this apparatus, the green crop can be dried in a relatively rapid and energy-saving manner.

Further elaborations of the invention are described in the dependent claims. The invention will now be clarified with reference to an exemplary embodiment and the drawing, in which:
Fig. 1 shows a partly cutaway side elevational view of an exemplary embodiment of the invention; and
Fig. 2 shows a front view of the exemplary embodiment shown in Fig. 1.

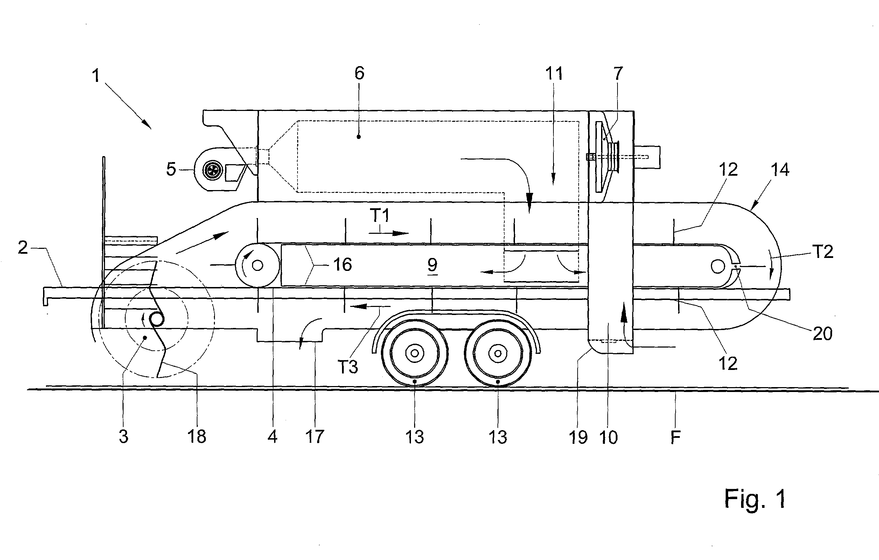

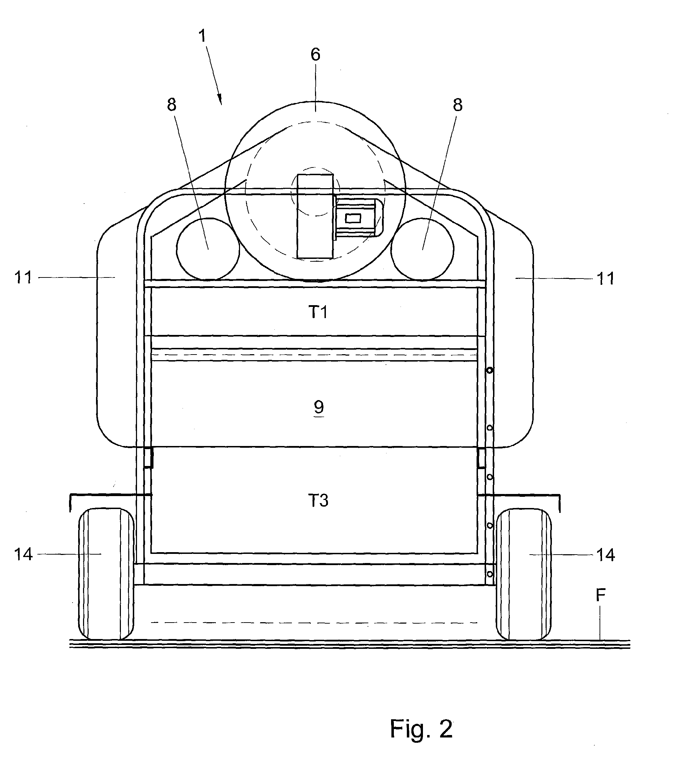

Figs. 1 and 2 show an apparatus 1 for thermally treating cut green crop. The apparatus 1 comprises a frame 2 mobile via wheels 13, provided with a rotatable throwing wheel 3 and a conveyor 4 disposed in a treatment chamber 14. The throwing wheel 3 is provided with throwing arms 18 to take cut green crop from a field F upon rotation of the throwing wheel 3 and to throw it on the conveyor 4. This conveyor 4 is arranged to convey the green crop along a treatment path T in the treatment chamber 14 and to throw it back on the field F via an outlet 17. Viewed in a longitudinal direction of the path, the treatment path T comprises an upper straight path part T1, a path bend part T2 and a lower straight path part T3 which ends at the outlet 17. The conveyor 4 has a heat-transmissive design and can, for instance, comprise conveyor chains and/or a perforated conveyor belt for this purpose. The conveyor 4 is further provided with bars or perforated buckets 12 extending in the whole treatment path T, to move the green crop through the treatment path T. The buckets 12 are arranged to push the green crop at the lower path part T3 along an inner wall of the treatment chamber 14. Preferably, the treatment path T has a length of at least 5 m, so that the green crop to be treated can have a relatively long residence time in this path T, depending on a conveying speed of the green crop, for breaking the cell walls in this crop.

As the Figures show, the apparatus 1 comprises a burner 5 disposed in an oven 6 to heat an amount of air present in this oven 6. The burner 5 can, for instance, comprise an oil or gas burner. The apparatus 1 is provided with two fuel tanks 8 to store fuel for the burner 5. The fuel tanks 8 extend in a longitudinal direction of the apparatus along both sides of the oven 6, so that the tanks have a relatively large volume. Via air ducts 11, the oven 6 is in fluid connection with an air distribution chamber 9. The apparatus 1 is further provided with a ventilation fan 7 to draw in air at least via one suction pipe 10 from the field F, lead it to the oven 6 and supply it from the oven 6 via the air ducts 11 to the air distribution chamber 9. The ventilation fan 7 is located upstream of the burner, so that the ventilation fan does not pump heated gases but relatively cool air. In addition, an overpressure prevails in the oven, which is favorable for the efficiency of the heating process. The oven 6 extends in a longitudinal direction of the apparatus 1. Thus, this oven 6 has a relatively large capacity, so that a relatively large amount of treatment fluid can be heated in it.

The air distribution chamber 9 is arranged to supply the air heated in the oven 6 to the treatment path T. For this purpose, a wall 16 of the distribution chamber 9, which wall extends along the path T, is provided with fluid passages not shown in the Figure, for instance grids, pores, gas-permeable material or the like. The distribution chamber 9 extends substantially throughout the whole length of the treatment path T along this path T, so that crop present in the path T can be thermally treated at substantially the same treatment temperature along substantially the whole path. Since, in addition, the air distribution chamber 9 extends below the upper path part T1 and above the lower path part T3, heated treatment air can be supplied to the green crop present in the path T both from below and from above. This enables a good heat penetration and a homogeneous heat treatment of the crop. Further, the air distribution chamber 9 is provided with means 20 to inject heated air at a relatively high rate into the path bend part T2, for instance a locally provided venturi 20. During use, the green crop can tilt during movement through the path bend part T2. Thus, the hot air which is injected at a relatively high flow rate into the path bend part T2, can mix well with the green crop for the purpose of the desired thermal treatment.

The suction pipe 10 extends towards a position downstream with respect to the heating path T, in the present exemplary embodiment below the frame 4 near a rear side of the apparatus 1. During use, air near this position comes at least partly from the outlet 17 of the path T, so that this air, which has already been heated, can be at least partly supplied back into the apparatus 1 by ventilation fan 7. Further, during use, this air can have been heated by heated green crop thrown on the field F via the outlet 17. By means of this supply of hot air, energy can be saved. Further, the air drawn in via the suction pipe 10 can contain water vapor which has been abstracted from already treated green crop. This causes the water vapor concentration in the treatment air to increase during use, which results in an increase of the efficiency of the thermal treatment. At the lower end, the suction pipe 10 is provided with a screening 19 to prevent green crop thrown back on the field from being drawn in via this suction pipe 10.

During use, the apparatus 1 is moved over the field F. Here, the throwing arms 18 of the rotating throwing wheel 3 take cut green crop from the field F and throw the crop on the conveyor 4, which then leads the crop along the treatment path T. In the path T, the green crop is subjected to such a thermal treatment that cell walls in the green crop are broken. This treatment is carried out by supplying air heated in the oven 6 to the treatment path T via the distribution box 9 as the green crop is moved through this path T.

The green crop is preferably led along the treatment path T at a lower speed than the speed at which the apparatus is moved over a field F. In this manner, a relatively large amount of green crop can be collected on the conveyor 4. In addition, in this manner, the residence time of the green crop in the path T is relatively long, so that the heat of the heated air can well penetrate the green crop. The speed of the green crop along the treatment path can, for instance, be at least five times slower than the speed of the apparatus.

After the thermal treatment, the green crop is brought back on the field F via the outlet 17 and stays on the field F for a drying period. Preferably, a relatively short drying period is used, such as in the range of approximately 1-4 hours and more particularly in the range of approximately 1-2 hours. In practice, it has been found that, even within such short drying periods, the green crop reaches moisture contents sufficiently low for follow-up steps, as appears from the example below. Such moisture contents are preferably lower than approximately 70 wt.% (30 wt.% of dry crop), particularly lower than approximately 60 wt.% (40 wt.% of dry crop) and more particularly lower than approximately 50 wt.% (50 wt.% of dry crop). After the drying period, the green crop is centrally collected to be centrally dried further.

Naturally, the invention is not limited to the exemplary embodiment described. Various modifications are possible within the scope of the invention as set forth in the following claims.

The green crop can, for instance, comprise grass, clover, alfalfa or a combination of similar or other green crop.

Further, the thermal treatment can be carried out using different means, for instance using a microwave, infrared radiators, blow -dryers, or using a combination of these or other heating means.

In addition, the green crop can be centrally collected in different manners and can optionally be further treated. For instance, the green crop can be centrally collected and then be subjected to a central drying step to obtain a further decrease of the moisture content. In addition, the green crop can, for instance, be rolled into bales - at least after the drying period on the field - and then be packaged in, for instance, plastic packages. Further, the green crop can, for instance, be collected in a pit and then be covered.

## Claims

1. A method for drying cut green crop, such as grass, wherein the method comprises at least the following steps:
a) the green crop, after cutting, is taken from a field (F) and, directly after being taken up from the field (F), it is subjected there to such a thermal treatment that the cell walls in the green crop are broken;
b) the green crop is thrown back on the field (F) directly after the thermal treatment and stays on the field (F) for a drying period; and
c) the green crop is centrally collected after the drying period.

2. A method according to claim 1, wherein the method further comprises the following step:
d) the centrally collected green crop undergoes a central drying step.

3. A method according to claim 1 or 2, wherein the drying period is such that, after this period, the green crop has a moisture content lower than approximately 70 percent by weight (30 wt.% of dry crop).

4. A method according to any one of the preceding claims, wherein the drying period is such that, after this period, the green crop has a moisture content lower than approximately 60 percent by weight (40 wt.% of dry crop).

5. A method according to any one of the preceding claims, wherein the drying period is such that, after this period, the green crop has a moisture content lower than approximately 50 percent by weight (50 wt.% of dry crop).

6. A method according to any one of the preceding claims, wherein the drying period is in the range of approximately 1-4 hours.

7. A method according to any one of the preceding claims, wherein the drying period is in the range of approximately 1-2 hours.

8. A method according to any one of the preceding claims, wherein the thermal treatment is carried out by supplying a heated treatment fluid which has been brought to a particular treatment temperature to the green crop.

9. A method according to claim 8, wherein said treatment temperature is in the range of approximately 100-400°C, preferably between 200-350°C.

10. A method according to claim 8 or 9, wherein the treatment fluid is drawn in from a part of the field (F) on which green crop which has already been subjected to the said thermal treatment has been thrown.

11. A method according to any one of claims 8-10, wherein the treatment fluid comprises water vapor.

12. A method according to at least claim 2, wherein the green crop is indirectly dried in the said central drying step.

13. A method according to claim 12, wherein, for the purpose of indirectly drying the green crop, a drying fluid is led via a heat exchanger along combustion gases from a burner in order to heat this treatment fluid, wherein the heated drying fluid is supplied to the green crop.

14. A method according to at least claim 1, wherein the method further comprises the following step:
d) the green crop is collected in bales and packaged.

15. A method according to at least claim 1, wherein the method further comprises the following step:
d) the green crop is collected in a pit and then covered.

16. An apparatus for thermally treating cut green crop, wherein the apparatus is provided with conveying means (3, 4) to take the green crop from a field (F), to lead it along a treatment path (T), and to bring it back on the field (F), wherein the apparatus further comprises heat supplying means (7, 9, 11) to supply heat to the treatment path (T), wherein the conveying means (3, 4) and heat supplying means (7, 9, 11) are arranged to subject green crop led along the treatment path (T) to such a thermal treatment that the cell walls in the green crop are broken under the influence of this treatment.

17. An apparatus according to claim 16, wherein the heat supplying means (7, 9, 11) are arranged to supply heat to the treatment path (T) substantially over the whole length of this path (T).

18. An apparatus according to claim 16 or 17, wherein the heat supplying means (7, 9, 11) are arranged to supply a heated treatment fluid to the treatment path (T).

19. An apparatus according to at least claim 18, wherein the heat supplying means comprise a fluid distribution chamber (9), disposed along the treatment path (T), which is provided with fluid passages extending towards the path (T).

20. An apparatus according to claim 18 or 19, wherein the apparatus is provided with fluid supplying means (7, 10) to supply treatment fluid from a position downstream with respect to the treatment path (T) from the field (F) and to supply it to the heat supplying means (7, 9, 11).

21. An apparatus according to any one of claims 16-20, wherein the treatment path (T) has a length of at least approximately 5 m.

22. An apparatus according to any one of claims 16-21, wherein the said conveying means are provided with an endless conveyor (4) extending along the treatment path (T) to convey green crop along this path (T).

23. An apparatus according to claim 22, wherein the conveyor (4) comprises conveyor chains.

24. An apparatus according to claim 22 or 23, wherein the conveyor (4) is provided with buckets (12) extending in the treatment path (T).

25. An apparatus according to at least claim 16, wherein the apparatus is provided with means to tilt the green crop as this green crop is led along the treatment path (T).

26. An apparatus according to at least claim 18, wherein the apparatus is provided with means to inject treatment fluid into the treatment path (T2) at a relatively high rate.

27. An apparatus according to at least claim 18, wherein the apparatus is provided with an oven (6) extending in a longitudinal direction of the apparatus (1) for heating the treatment fluid.

28. Use of an apparatus according to at least claim 16, wherein the green crop is led along the treatment path (T) at a lower speed than a speed at which the apparatus is moved over a field (F) from which the apparatus takes the green crop.

29. Use according to claim 28, wherein the speed of the green crop along the treatment path (T) is at least five times slower than the speed of the apparatus.
